# EUROPEAN PATENT SPECIFICATION

(11) **EP 0 841 124 B1**
(45) Date of publication and mention of the grant of the patent: **20.06.2001**
(21) Application number: 97118555.8
(22) Date of filing: 24.10.1997
(51) Int. Cl.: B25B 5/06

(54) **Rotary clamping apparatus**
Schwenkspanner
Dispositif de serrage pivotant

(30) Priority: 06.11.1996 JP 29348696
(43) Date of publication of application: 13.05.1998
(73) Proprietor: KABUSHIKI KAISHA KOSMEK, Kobe-shi, Hyogo (JP)
(72) Inventor: Yonezawa, Keitaro, c/o Kabushiki Kaisha Kosmek, Kobe-shi, Hyogo (JP)
(74) Representative: Horton, Andrew Robert Grant

(56) References cited:
- GB-A- 1 435 027
- GB-A- 2 082 093
- US-A- 4 560 152
- ZHABIN A I ET AL: "MECHANIZATION OF SETTING-UP AND CLAMPING JOBS IN HEAVY MACHINES" SOVIET ENGINEERING RESEARCH (STANKI I INSTRUMENTY & VESTNIK MASHINOSTROENIA MASHINOSTROCNIE), vol. 10, no. 6, 1 January 1990, pages 89-91, XP000217769
- PATENT ABSTRACTS OF JAPAN vol. 006, no. 240 (M-174), 27 November 1982 & JP 57 138550 A (AIOI SEIKI KK), 26 August 1982,

## Description

The present invention relates to a clamping apparatus of the type that moves a clamp rod linearly to a clamping position after having rotated it from a retreated position to an unclamping position, and more particularly to a technique making it possible for a clamping spring to perform a strong clamping.

Generally, a rotary clamping apparatus of this type is adapted to drive a clamp rod to a clamping position by pressurized oil supplied to an actuation chamber for clamping (for example, see Japanese Patent Publication No. 49-41550).

Although the foregoing prior art is excellent in that it can effect a strong clamping by the pressure of a fluid such as pressurized oil, it has a problem that when the fluid pressure within the actuation chamber for clamping disappears due to fluid leakage or the like, clamping force also disappears.

In order to solve the above-mentioned problem, the present invention has an object to provide a rotary clamping apparatus of such a type as being capable of driving a clamp rod by a spring force and to make the clamping apparatus compact.

The invention is defined in the independent claim 1, which is characterised relative to GB-A-1 435 027.

The present invention functions, as defined in independent claim 1, in the following manner.

In a retreated condition of pressurized fluid supplied to the second chamber will have raised the piston and the clamp rod to push the input portion for clamping of the clamp rod to the stopper.

When the pressurized fluid is discharged from the second chamber, an urging force of the clamping spring will push the piston downward and on the other hand the pushing means (for example a back pressure produced in the second chamber by the urging force of the clamping spring) will maintain the clamp rod at an initial raised position. Therefore, the converting mechanism will rotate the clamp rod relatively to the piston to switch it over to an unclamping position and then lower the clamp rod straightly along with the piston to switch it over to a clamping position.

On switching over from a clamping condition to the retreated condition, the pressurized fluid is supplied to the second chamber and the clamp rod is driven by the procedures contrary to the foregoing ones.

This invention presents the following advantages.

Since a clamping spring can urge a clamp rod toward a clamping position, it has become possible to strongly clamp a metal mold, a workpiece or the like object to be fixed, by an urging force of the spring.

Further, the clamp rod is inserted into a through-hole of an annular piston and an input portion for clamping provided at an end portion of the clamp rod is projected into a second chamber so that it can be received by a stopper. Accordingly, an axial midway portion of the clamp rod need not be stepped. This can make the clamp rod highly rigid as well as small and light.

In addition, the urging force of the clamping spring is made to act on the clamp rod through the piston and the clamp rod is adjusted to be rotatable relatively to the piston, so that it is possible to prevent the spring from twisting when the clamp rod is rotated and further simplify the construction for preventing its twist.

Moreover, with the converting mechanism being arranged between the clamp rod and the piston, a space dedicated for the converting mechanism can be omitted. Consequently, a height of a housing can be reduced to decrease an axial space for installing a rotary clamping apparatus.

Figs. 1 to 7 show a first embodiment of the present invention;
Fig. 1 is a vertical sectional view of a clamping apparatus in a retreated condition;
Fig. 2(A) is a schematic view for explaining the operation of the clamping apparatus and shows the retreated condition;
Fig. 2(B) shows an unclamping condition;
Fig. 2(C) shows a clamping condition;
Fig. 3 is a schematic view in elevation of an input portion for rotation provided in a clamp rod of the clamping apparatus;
Fig. 4(A) is a schematic plan view of an annular piston to be engaged with the input portion for rotation;
Fig. 4(B) is a sectional view taken along a line B-B in Fig. 4(A) when seen in a direction indicated by arrows;
Fig. 5 is a developed view of the piston when it is cut along a line V in Fig. 4(A) and the cut surface is seen from its inside;
Fig. 6 is a developed view of the input portion for rotation and corresponds to Fig. 5;
Fig. 7(A) is a schematic view for explaining the operation of a converting mechanism of the clamping apparatus and shows the retreated condition;
Fig. 7(B) shows the unclamping condition;
Fig. 8 shows a modification of the clamping apparatus and is a partial view corresponding to Fig. 1;
Fig. 9 shows another modification of the clamping apparatus and is a partial view corresponding to Fig. 1; and
Fig. 10 shows a second embodiment of the present invention and corresponds to Fig. 1.

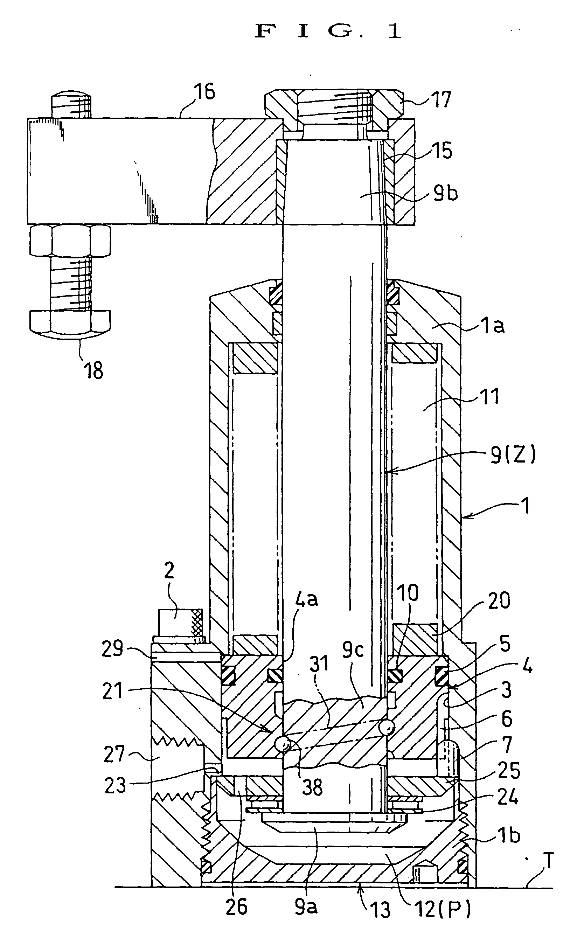

A first embodiment of a clamping apparatus according to the present invention is explained with reference to Figs. 1 to 7.

First, a construction of the clamping apparatus is explained by the vertical sectional view of Fig. 1.

A housing 1 of the clamping apparatus is fixed to an upper surface of a table (T) by a plurality of bolts 2 (only one of which is shown in this embodiment).

An annular piston 4 is inserted into a guide bore 3 of the housing 1, to be oiltight and vertically movable, through a first packing 5. The piston 4 is prevented from rotating around an axis by engaging a vertical groove 6 of the piston 4 with a detent pin 7.

A first chamber 11 is formed between a upper end wall (a first end wall) la of the housing 1 and the piston 4. And a second chamber 12 is formed between a lower end wall (a second end wall) 1b of the housing 1 and the piston 4. The lower end wall 1b is constructed from a bottom wall of a screw cap 13. The screw cap 13 positions the detent pin 7.

A clamp rod 9 is hermetically inserted into a through-hole 4a of the piston 4, to be oiltight, through a second packing 10. An input portion 9a for clamping provided at a lower end portion (a second end portion) of the clamp rod 9 is projected into the second chamber 12. An output portion 9b for clamping provided at an upper end portion (a first end portion) of the clamp rod 9 is projected upward of the upper end wall la of the housing 1. An arm 16 is fixed onto a tapered surface 15 of the output portion 9b through a nut 17. A push bolt 18 is brought into screw-thread engagement with a leading end of the arm 16 so as to be vertically adjustable.

While the piston 4 is urged downward by a clamping spring 20 consisting of a compression coil spring and mounted in the first chamber 11, it is moved upward against the clamping spring 20 by pressurized oil supplied to the second chamber 12. There is provided a converting mechanism 21 for converting a vertical movement of the piston 4 to a rotary movement of the clamp rod 9. A concrete structure of the converting mechanism 21 is described later.

Provided on a peripheral wall of the second chamber 12 is a stopper 23 for preventing the input portion 9a for clamping from moving upward. A thrust bearing 24 and an annular transmission plate 25 are interposed between the input portion 9a and the stopper 23. The transmission plate 25 is externally fitted onto the input portion 9a and supported axially movably by the peripheral wall of the second chamber 12. An upper side of the transmission plate 25 is communicated with a lower side thereof through a communication hole 26. Numeral 27 indicates a supply and discharge port of the pressurized oil.

A breather passage 29 provided between the first chamber 11 and an outside of the housing 1 may be omitted. However, if the breather passage 29 is provided, it is preferable to attach to the breather passage 29 a check valve (not shown) for prohibiting a flow from the outside of the housing 1 to the first chamber 11. The check valve can prohibit moisture, dust or the like foreign matters existing in the atmosphere from invading the first chamber 11 and therefore the piston 4 can be smoothly driven for a long period of time.

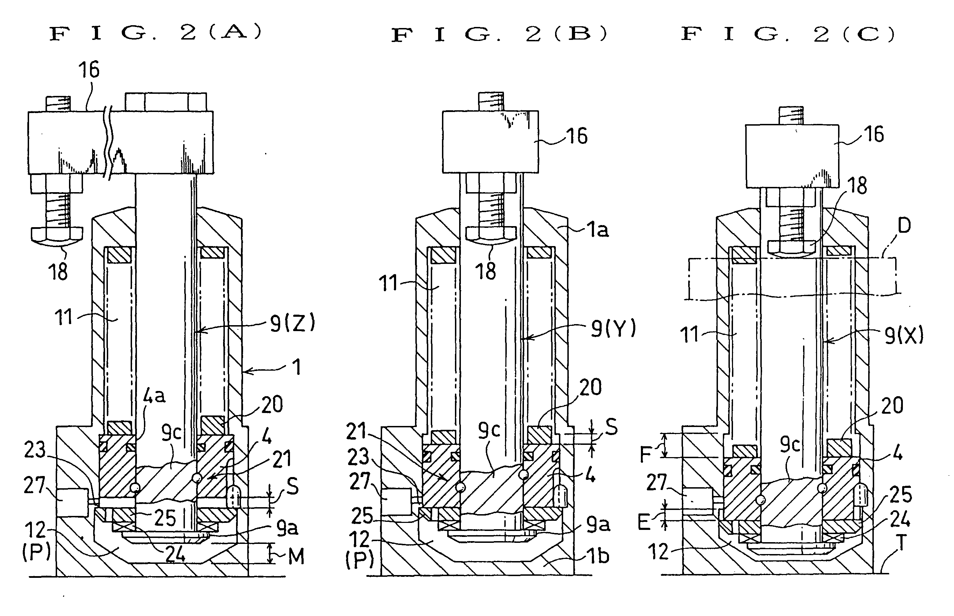

Operation of the clamping apparatus is explained hereafter by resorting to Figs. 2(A), 2(B) and 2(C).

In a retreated condition shown in Fig. 2(A), pressurized oil (having a pressure of about 50 to 140 kgf/cm² 'about 5 to 14 MPa' in this embodiment) is supplied to the second chamber 12. The piston 4 and the clamp rod 9 are raised. Further, an allowable stroke (M) is formed below the input portion 9a for clamping.

On switching over the clamping apparatus from the retreated condition of Fig. 2(A) to a clamping condition of Fig. 2(C) via an unclamping condition of Fig. 2(B), the pressurized oil within the second chamber 12 is discharged through the supply and discharge port 27. Then the piston 4 goes down by an urging force of the clamping spring 20 to produce a predetermined back pressure (a pressure of about 10 to 50 kgf/cm² 'about 1 to 5 MPa' in this embodiment) within the second chamber 12.

The back pressure keeps the input portion 9a for clamping pushed to the stopper 23 through the thrust bearing 24 and the transmission plate 25. Therefore, the clamp rod 9 is rotated by the converting mechanism 21 while the piston 4 is going down. In other words, the back pressure within the second chamber 12 constitutes a pushing means (P) at the time of clamp rotation.

The pushing means (P) may further include a weak pushing spring in addition to the back pressure within the second chamber 12 or consist of only a pushing spring.

And as shown in Fig. 2(B), when the piston 4 goes down by a rotation stroke (S) and its lower surface contacts with the transmission plate 25, the clamp rod 9 is switched over to an unclamping position (Y). Next, the piston 4 lowers the input portion 9a for clamping by the urging force of the clamping spring 20 to switch over the clamp rod 9 to a clamping position (X) of Fig. 2(C). Thus the push bolt 18 fixes a metal mold (D) to the table (T). In Fig. 2(C) character (E) indicates a clamping stroke and character (F) does a stroke of the clamping spring 20.

On switching over the clamping condition of Fig. 2(C) to the retreated condition of Fig. 2(A) via the unclamping condition of Fig. 2(B), the pressurized oil is supplied from the supply and discharge port 27 in the clamping condition of Fig. 2(C).

Then the oil pressure acts on the clamp rod 9 and the piston 4. The oil pressure acting on a receiving area of the clamp rod 9 pushes up the piston 4 through the input portion 9a for clamping, the thrust bearing 24 and the transmission plate 25 in order and the oil pressure acting on an annular receiving area of the piston 4 also pushes up the piston 4.

Thus the piston 4 is raised against the clamping spring 20 and as shown in Fig. 2(B) the input portion 9a for clamping is prevented from going up by the stopper 23 to switch over the clamp rod 9 to the unclamping position (Y).

Subsequently, only the piston 4 is raised relatively to the clamp rod 9 prevented from going up, whereby the clamp rod 9 is rotated by the converting mechanism 21 to a retreated position (Z) of Fig. 2(A).

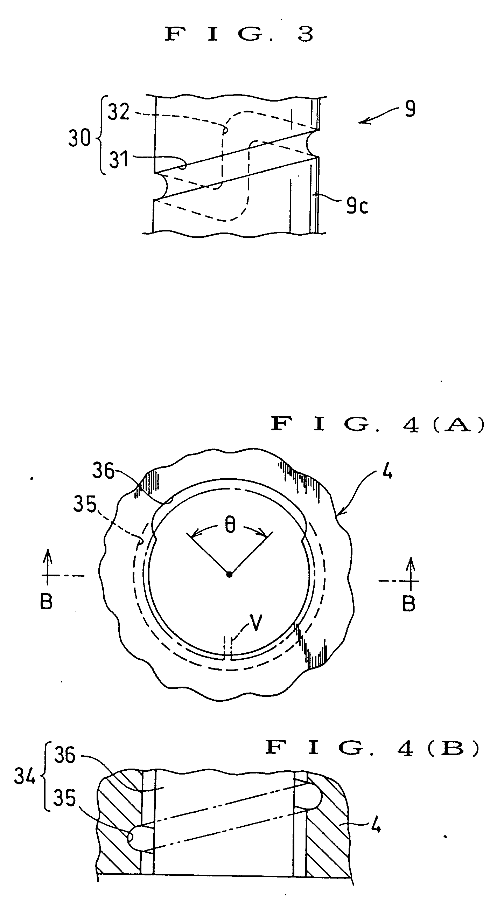

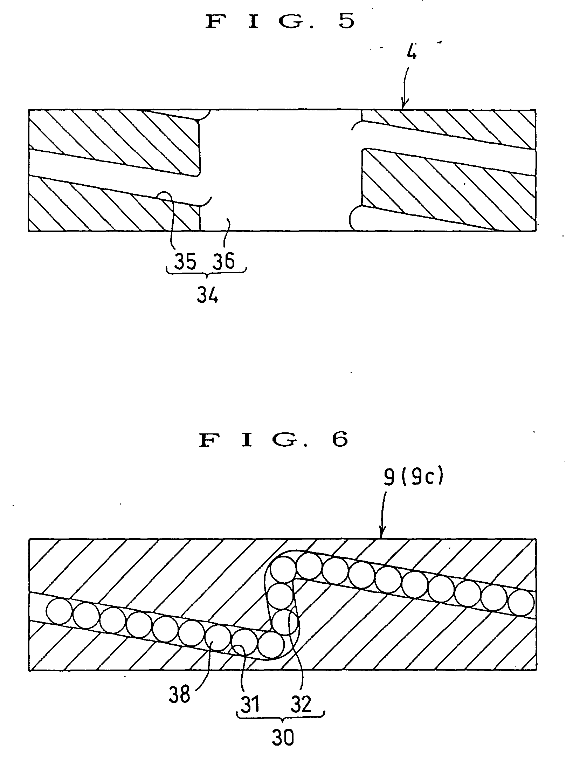

A concrete structure of the converting mechanism 21 is explained with reference to the schematic views of Figs. 3 to 7. Fig. 3 is an elevation view of an input portion 9c for rotation of the clamp rod 9. Fig. 4(A) is a partial plan view of the piston 4. Fig. 4(B) is a sectional view taken along a line B-B in Fig. 4(A) when seen in a direction indicated by arrows. Fig. 5 is a developed view of the piston 4 when the piston 4 is cut along a line V in Fig. 4(A) and the cut surface is seen from its inside. Fig. 6 is a developed view of the input portion 9c and corresponds to Fig. 5.

As shown in Figs. 3 and 6, the input portion 9c for rotation is provided with a rotary groove 30 concaved in the shape of an arc. The rotary groove 30 is composed of a first groove portion 31 formed spirally by about one pitch in an outer peripheral surface of the input portion 9c and a second groove portion 32 communicating an initial end of the first groove portion 31 with a terminal end thereof substantially in an axial direction.

As shown in Figs. 4 and 5, the piston 4 is provided with an actuating groove 34. The actuating groove 34 is composed of a rotation actuating groove portion 35 formed spirally in correspondence with the first groove portion 31 and a relief groove portion 36 formed so as to extend peripherally in correspondence with the second groove portion 32. The peripheral length of the relief groove portion 36 is'adjusted to correspond to a desired rotation angle (*θ*) (about 90 degrees in this embodiment) of the clamp rod 9 as shown in Fig. 4(A).

As shown in Fig. 6 (and Fig. 1), a number of steel rolling balls 38 are charged into a space between the rotary groove 30 and the actuating groove 34.

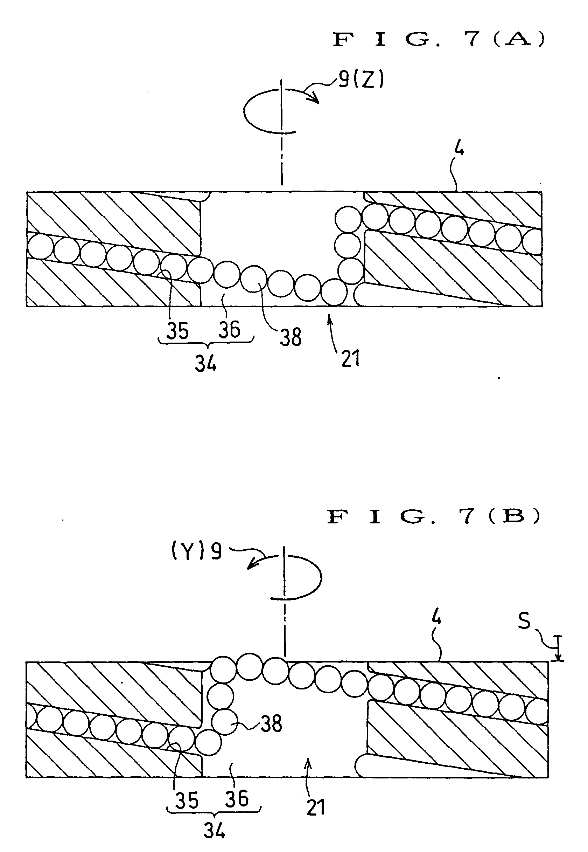

Operation of the converting mechanism 21 of the foregoing structure is explained by resorting to the schematic views of Figs. 7(A) and 7(B) for explaining the operation with reference to Figs. 2(A) and 2(B) and Fig. 6.

In the retreated condition shown in Fig. 2(A) and Fig. 7(A), the piston 4 is raised relatively to the clamp rod 9 and the clamp rod 9 is rotated in a clockwise direction when seen in plan and switched over to the retreated position (Z). When the clamp rod 9 is rotated for clamping, the piston 4 is lowered by a rotation stroke (S) relatively to the clamp rod 9 at the retreated position (Z) of Fig. 2(A). Then as shown in Fig. 2(B) and Fig. 7(B), the clamp rod 9 is rotated in a counterclockwise direction when seen in plan along the rotation actuating groove portion 35 and at the same time the many balls 38 are circulated in the counterclockwise direction when seen in plan. Thus the clamp rod 9 is switched over to the unclamping position (Y).

When rotating for retreating, the clamp rod 9 is switched over from the unclamping position (Y) of Fig. 2(B) and Fig. 7(B) to the retreated position (Z) of Fig. 2(A) and Fig. 7(A) according to the procedures substantially contrary to the above-mentioned ones.

Since the converting mechanism 21 does not exert any excessive force on the balls 38, it is sufficient to provide only a single set of the rotary groove 30 and the actuating groove 34 and charge merely a small number of required balls, which results in the possibility of making the converting mechanism 21 compact and simple. Further, having a structure of rolling-ball type, the converting mechanism 21 suffers from only a small frictional resistance at the time of rotation. In consequence, it is possible to perform a smooth rotation and at the same time shorten a lead of the rotary groove 30. As a result, the rotation stroke (S) can be reduced, which in turn decreases a vertical space for installing the clamping apparatus.

The first embodiment further presents the following advantages.

When the clamp rod 9 rotates for clamping, the urging force of the clamping spring 20 produces the predetermined back pressure in the pressurized fluid within the second chamber 12. The input portion 9a for clamping can be pushed to the stopper 23 by utilizing that back pressure acting on the clamp rod 9. Therefore, the pushing spring may be removed from the pushing means (P). Alternatively, in a case where a spring force of the pushing spring constitutes a portion of a pushing force of the pushing means (P), it becomes possible to set an urging force of the pushing spring to a small value owing to the existence of the back pressure.

Accordingly, the pushing 'means (P) becomes compact to result in the possibility of making the clamping apparatus smaller.

Additionally, interposed between the input portion 9a for clamping and the stopper' 23 is the annular transmission plate 25, into which the input portion 9a is inserted rotatably. Consequently, an outer diameter length of the input portion 9a can be decreased to result in the possibility of making the clamp rod 9 lighter.

Besides, the annular transmission plate 25 is supported on the peripheral wall of the second chamber 12 axially movably, so that the input portion 9a for clamping can be guided by the peripheral wall of the second chamber 12 through the transmission plate 25. Thus the clamp rod 9 can be guided with an improved accuracy to result in the possibility of conducting the clamping operation assuredly.

Moreover, the thrust bearing 24 is interposed between the annular transmission plate 25 and the input portion 9a for clamping. This arrangement can rotate the clamp rod 9 smoothly and assuredly to result in the possibility of making the converting mechanism 21 simple and compact.

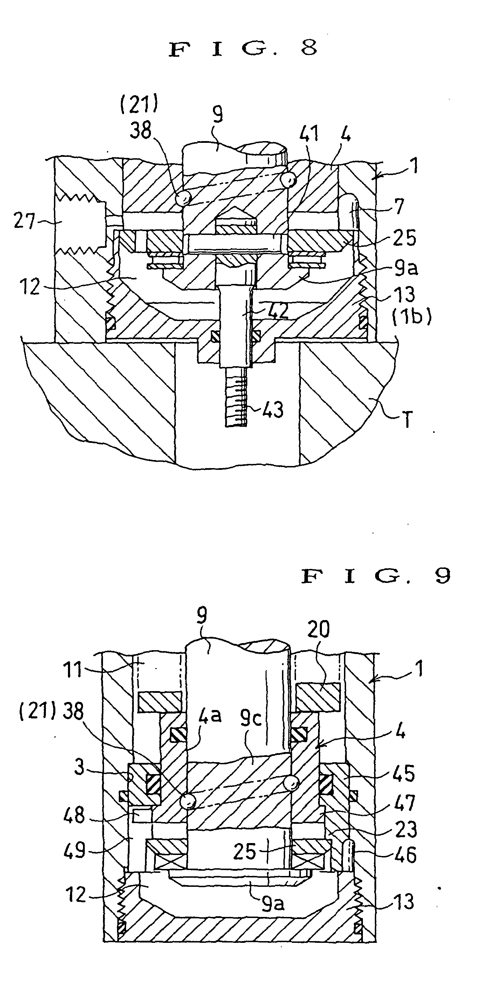

Figs. 8 and 9 each show a modification of the clamping apparatus and are partial views corresponding to Fig. 1. In these modifications, the members which function like those mentioned in the first embodiment are in principle designated by the same numerals.

In the modification shown in Fig. 8, an actuation rod 42 is attached to the input portion 9a for clamping of the clamp rod 9 by a pin 41. The actuation rod 42 projects downward of the screw cap 13. It is possible to identify whether the clamping apparatus is in the clamping condition or in the retreated condition through detecting a height of a projected screw portion 43 of the actuation rod 42 by a limit switch or the like detectors.

The modification of Fig. 9 is created by modifying the clamping apparatus of Fig. 1 for a high-pressure use (where pressurized oil having a relatively high pressure of about 140 to 250 kgf/cm² 'about 14 to 25 MPa' is supplied). A sleeve 45 for adapter is oiltightly fixed to the guide bore 3 of the housing 1. Numeral 46 designates a detent pin. The annular piston 4 is unrotatably inserted into the sleeve 45. More specifically, a projection 48 of a lower flange 47 of the piston 4 is fitted into a vertical groove 49 of the sleeve 45. The stopper 23 provided in the sleeve 45 receives the transmission plate 25.

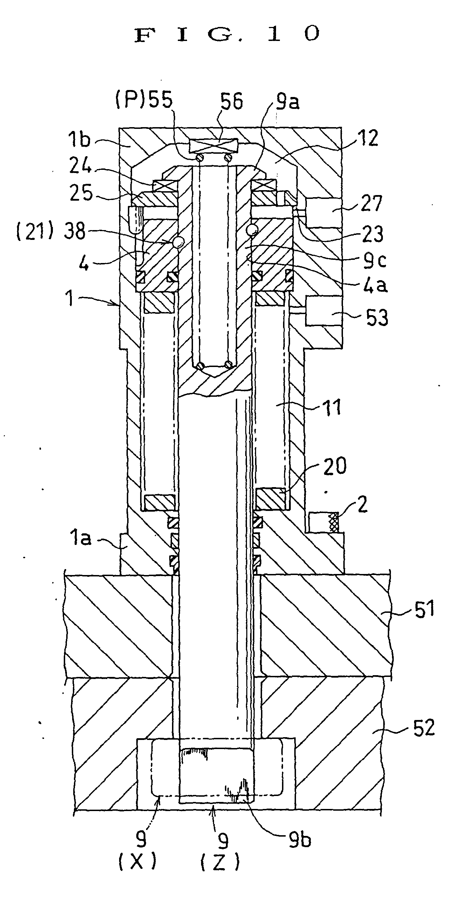

Fig. 10 shows a second embodiment of the clamping apparatus and corresponds to Fig. 1. Also in this second embodiment, the members which function like those mentioned in the first embodiment are in principle designated by the same numerals.

The clamping apparatus shown in Fig. 10 fixes'an upper die 52 to an under surface of a slide 51 of a press machine. It is arranged in a posture vertically opposite to the first embodiment and has a structure of double-acting type.

More specifically, while the supply and the discharge port 27 is communicated with the second chamber 12 formed above the annular piston 4, another supply and discharge port 53 is also communicated with the first chamber 11 formed below the piston 4.

In the illustrated condition, the pressurized oil has been discharged from the first chamber 11 and supplied to the second chamber 12. The clamp rod 9 is switched over to the retreated position (Z).

At the time of clamping, the pressurized oil is discharged from the second chamber 12 and supplied to the first chamber 11. Then the clamp rod 9 is operated similarly as shown in Figs. 2(A), 2(B) and 2(C) and switched over to the clamping position (X) indicated by an alternate dash-and-two dots chain line. In this case, the clamp rod 9 can be strongly driven by the urging force of the clamping spring 20 in addition to the oil pressure of the first chamber 11. Even if the oil pressure of the first chamber 11 disappears for some reason, the urging force of the clamping spring 20 can keep the clamping condition.

The pushing means (P) is composed of a pushing spring 55 attached within an upper portion of the clamp rod 9 and a back pressure produced within the second chamber 12 when the clamp rod 9 is rotated for clamping. Numeral 56 indicates a thrust bearing.

It should be noted that the pushing means (P) may employ either of the pushing spring 55 and the back pressure within the second chamber 12.

The second embodiment presents the following advantage.

There is provided the pushing spring 55 for urging the clamp rod 9 toward the first end wall la. Accordingly, even if the back pressure produced within the second chamber 12 is small for some reason, the urging force of the pushing spring 55 can push the input portion 9a for clamping to the stopper 23 without failure and therefore rotate the clamp rod 9 assuredly.

Each of the above-mentioned embodiments can be modified as follows.

The fluid to be supplied to the first chamber 11 or the second chamber 12 may be other kinds of liquid or a gas such as air instead of the pressurized oil.

The converting mechanism 21 may have a structure of either a combination of a spiral inclined groove and a cam fitted into the groove or a screw-thread fitting instead of the rolling-ball type.

## Claims

1. A rotary clamping apparatus comprising:.
a housing (1) having a first end wall (1a) through which a clamp rod (9) projects, and a second end wall (1b),
an annular piston (4) provided with a through-hole (4a) and inserted into the housing (1) to be axially moveable but irrotational therein;
a first chamber (11) formed between the first end wall (1a) and the piston (4);
a second chamber (12) formed between the second end wall (1b) and the piston (4), the clamp rod (9) having an input portion (9a) for clamping and an input portion (9c) for rotation and being hermetically inserted into the through-hole (4a) of the piston (4), the input portion (9a) for clamping projecting into the second chamber (12); and
a converting mechanism (21) provided between the said input portion (9c) for rotation and the piston (4) so as to convert an axial movement of the piston (4) to a rotary movement of the clamp rod (9);
characterised in that.
a clamping spring (20) is mounted in the first chamber (11) for urging the piston (4) toward the second end wall (1b);
a supply and discharge port (27) for pressurised fluid is provided for supplying the pressurised fluid to the second chamber (12) and discharging it therefrom so as to raise and lower the piston (4) and the clamp rod (9);
a stopper (23) limits the movement of the input portion (9a) for clamping toward the first end wall (1a) during unclamping, such that the piston (4) is subsequently moved relative to the clamp rod (9); whereby the clamp rod (9) is rotated by the converting mechanism (21); and
a pushing means (P) is provided in the second chamber (12) for pushing the input portion (9a) for clamping to the stopper (23); such that, when the pressurised fluid is discharged from the second chamber (12) through the port (27), the urging force of the clamping spring (20) will urge the piston (4) towards the second end wall (1b) and the converting mechanism (21) will rotate the clamp rod (9).

2. A rotary clamping apparatus as set forth in claim 1, wherein an urging force of the clamping spring (20) produces a predetermined back pressure in the pressurized fluid within the second chamber (12), the back pressure which acts on the clamp rod (9) constituting at least a portion of a pushing force of the pushing means (P).

3. A rotary clamping apparatus as set forth in claim 1, wherein there is provided a pushing spring (55) for urging the clamp rod (9) toward the first end wall (1a), an urging force of the pushing spring (55) constituting at least a portion of a pushing force of the pushing means (P).

4. A rotary clamping apparatus as set forth in claim 1, wherein an annular transmission plate (25) is interposed between the input portion (9a) for clamping and the stopper (23), the input portion (9a) for clamping being rotatably inserted into the transmission plate (25).

5. A rotary clamping apparatus as set forth in claim 4, wherein the annular transmission plate (25) is axially movably supported by a peripheral wall of the second chamber (12).

6. A rotary clamping apparatus as set forth in claim 4, wherein a thrust bearing (24) is interposed between the transmission plate (25) and the input portion (9a) for clamping.

## Patentansprüche

1. Drehklemmvorrichtung, umfassend:
ein Gehäuse (1) mit einer ersten Stirnwand (1a), durch die ein Klemmstab (9) hervorsteht, und einer zweiten Stirnwand (1b);
einen ringförmigen Kolben (4), der mit einem Durchgangsloch (4a) versehen ist und in das Gehäuse (1) so eingesetzt ist, daß er darin axial beweglich, aber drehungsfrei ist;
eine erste Kammer (11), die zwischen der ersten Stirnwand (1a) und dem Kolben (4) ausgebildet ist;
eine zweite Kammer (12), die zwischen der zweiten Stirnwand (1b) und dem Kolben (4) ausgebildet ist, wobei der Klemmstab (9) einen Antriebsteil (9a) zum Klemmen und einen Antriebsteil (9c) zur Drehung aufweist und hermetisch in das Durchgangsloch (4a) des Kolbens (4) eingesetzt ist, wobei der Antriebsteil (9a) zum Klemmen in die zweite Kammer (12) hineinragt; und
einen Umwandlungsmechanismus (21), der zwischen dem Antriebsteil (9c) zur Drehung und dem Kolben (4) vorgesehen ist, um eine axiale Bewegung des Kolbens (4) in eine Drehbewegung des Klemmstabs (9) umzuwandeln;
dadurch gekennzeichnet, daß:
eine Klemmfeder (20) in der ersten Kammer (11) zum Drücken des Kolbens (4) in Richtung der zweiten Stirnwand (1b) montiert ist;
ein Zufuhr- und Ablaßkanal (27) für unter Druck stehendes Fluid zum Zuführen des unter Druck stehenden Fluids in die zweite Kammer (12) und zum Ablassen desselben aus dieser vorgesehen ist, um den Kolben (4) und den Klemmstab (9) anzuheben und abzusenken;
ein Anschlag (23) die Bewegung des Antriebsteils (9a) zum Klemmen in Richtung der ersten Stirnwand (1a) während des Ausspannens begrenzt, so daß der Kolben (4) anschließend relativ zum Klemmstab (9) bewegt wird; wobei der Klemmstab (9) durch den Umwandlungsmechanismus (21) gedreht wird; und
ein Schubmittel (P) in der zweiten Kammer (12) zum Schieben des Antriebsteils (9a) zum Klemmen zum Anschlag (23) vorgesehen ist; so daß, wenn das unter Druck stehende Fluid aus der zweiten Kammer (12) durch den Kanal (27) abgelassen wird, die Druckkraft der Klemmfeder (20) den Kolben (4) in Richtung der zweiten Stirnwand (1b) drückt und der Umwandlungsmechanismus (21) den Klemmstab (9) dreht.

2. Drehklemmvorrichtung nach Anspruch 1, wobei eine Druckkraft der Klemmfeder (20) einen vorbestimmten Gegendruck in dem unter Druck stehenden Fluid innerhalb der zweiten Kammer (12) erzeugt, wobei der Gegendruck, der auf den Klemmstab (9) wirkt, zumindest einen Teil einer Schubkraft des Schubmittels (P) bildet.

3. Drehklemmvorrichtung nach Anspruch 1, wobei eine Druckfeder (55) zum Drücken des Klemmstabes (9) in Richtung der ersten Stirnwand (1a) vorgesehen ist, wobei eine Druckkraft der Druckfeder (55) zumindest einen Teil einer Schubkraft des Schubmittels (P) bildet.

4. Drehklemmvorrichtung nach Anspruch 1, wobei eine ringförmige Übertragungsplatte (25) zwischen den Antriebsteil (9a) zum Klemmen und den Anschlag (23) eingefügt ist, wobei der Antriebsteil (9a) zum Klemmen drehbar in die Übertragungsplatte (25) eingesetzt ist.

5. Drehklemmvorrichtung nach Anspruch 4, wobei die ringförmige Übertragungsplatte (25) durch eine Umfangswand der zweiten Kammer (12) axial beweglich abgestützt wird.

6. Drehklemmvorrichtung nach Anspruch 4, wobei ein Axiallager (24) zwischen die Übertragungsplatte (25) und den Antriebsteil (9a) zum Klemmen eingefügt ist.

## Revendications

1. Dispositif de serrage pivotant comprenant :
un boîtier (1) comportant une première paroi (la) d'extrémité à travers laquelle fait saillie une tige (9) de serrage, et une seconde paroi (1b) d'extrémité ;
un piston annulaire (4) pourvu d'un trou traversant (4a) et introduit dans le boîtier (1) pour y être mobile axialement mais de manière immobile en rotation ;
une première chambre (11) formée entre la première paroi (1a) d'extrémité et le piston (4) ;
une seconde chambre (12) formée entre la seconde paroi (1b) d'extrémité et le piston (4), la tige (9) de serrage comportant une partie (9a) d'entrée de serrage et une partie (9c) d'entrée de pivotement et étant introduite de manière hermétique dans le trou traversant (4a) du piston (4), la partie (9a) d'entrée de serrage faisant saillie dans la seconde chambre (12) ; et
un mécanisme (21) de conversion disposé entre ladite partie (9c) d'entrée de pivotement et le piston (4), de façon à convertir un mouvement axial du piston (4) en un mouvement pivotant de la tige (9) de serrage ;
caractérisé en ce que :
un ressort (20) de serrage est monté dans la première chambre (11) pour pousser le piston (4) vers la seconde paroi (1b) d'extrémité ;
un orifice (27) d'alimentation et d'évacuation de fluide sous pression est prévu pour amener le fluide sous pression dans la seconde chambre (12) et l'en évacuer de façon à élever et abaisser le piston (4) et la tige (9) de serrage ;
une butée (23) limite le déplacement de la partie (9a) d'entrée de serrage vers la première paroi (la) d'extrémité pendant le desserrage, de sorte que le piston (4) se déplace en conséquence par rapport à la tige (9) de serrage ; ce par quoi la tige (9) de serrage est pivotée par le mécanisme (21) de conversion ; et
un moyen (P) de poussée est prévu dans la seconde chambre (12) pour pousser la partie (9a) d'entrée de serrage contre la butée (23), de sorte que, lors de l'évacuation du fluide sous pression de la seconde chambre (12) par l'orifice (27), la force de poussée du ressort (20) de serrage pousse le piston (4) vers la seconde paroi (1b) d'extrémité, et le mécanisme (21) de conversion fait pivoter la tige (9) de serrage.

2. Dispositif de serrage pivotant selon la revendication 1, dans lequel une force de poussée du ressort (20) de serrage produit une contre-pression prédéterminée dans le fluide sous pression à l'intérieur de la seconde chambre (12), la contre-pression qui agit sur la tige (9) de serrage constituant au moins une partie d'une force de poussée du moyen (P) de poussée.

3. Dispositif de serrage pivotant selon la revendication 1, dans lequel on a prévu un ressort (55) de poussée destiné à pousser la tige (9) de serrage vers la première paroi (la) d'extrémité, une force de poussée du ressort (55) de poussée constituant au moins une partie d'une force de poussée du moyen (P) de poussée.

4. Dispositif de serrage pivotant selon la revendication 1, dans lequel une plaque annulaire (25) de transmission est interposée entre la partie (9a) d'entrée de serrage et la butée (23), la partie (9a) d'entrée de serrage étant introduite mobile en rotation dans la plaque (25) de transmission.

5. Dispositif de serrage pivotant selon la revendication 4, dans lequel la plaque annulaire (25) de transmission est supportée mobile axialement par une paroi périphérique de la seconde chambre (12).

6. Dispositif de serrage pivotant selon la revendication 4, dans lequel un palier (24) de poussée est interposé entre la plaque (25) de transmission et la partie (9a) d'entrée de serrage.
